# EUROPEAN PATENT APPLICATION

(11) **EP 2 916 432 A1**
(43) Date of publication of application: **09.09.2015**
(21) Application number: 14158105.8
(22) Date of filing: 06.03.2014
(51) Int. Cl.: H02J 17/00, H05B 6/12, H05K 9/00

(54) **Electrical device**

(71) Applicant: Electrolux Appliances Aktiebolag, 105 45 Stockholm (SE)
(72) Inventor: Viroli, Alex, 47122 Forli (IT); Jeanneteau, Laurent, 47122 Forli (IT); Grassano, Andrea, 47122 Forli (IT)
(74) Representative: Baumgartl, Gerhard Willi

(57) **Abstract**

The invention relates to an electrical device adapted to be placed on an induction hob (20) comprising:
- a first portion (3) comprising a receiving coil (2) adapted to receive electric power from a transmission coil (22) of the induction hob (20);
- a second portion (4) comprising at least one electrical load (5), the electric load (5) being electrically coupled with the receiving coil (2);
- a shielding portion (10) located at least partially between the first portion (3) and the second portion (4), the shielding portion (10) being adapted to protect the second portion (4) against electromagnetic radiation transmitted by the transmission coil (22).

## Description

### Electrical device

Generally, the present invention relates to the field of electrical devices. More specifically, the present invention is related to an electrical device adapted to be placed on an induction hob.

### BACKGROUND OF THE INVENTION

Induction hobs for preparing food are well known in prior art. Induction hobs typically comprise at least one induction heater which is associated with at least one transmission coil. For heating a piece of cookware placed on the induction hob, the transmission coil is coupled with electronic driving means for driving an AC current through the transmission coil. Said AC current generates a time varying electromagnetic field radiated by the transmission coil. Typically, the transmitted electromagnetic field may be received by a piece of cookware.

### SUMMARY OF THE INVENTION

It is an objective of the embodiments of the invention to provide an electrical device to be powered in an alternative way by means of an induction hob. The objective is solved by the features of the independent claim. Preferred embodiments are given in the dependent claims. If not explicitly indicated otherwise, embodiments of the invention can be freely combined with each other.

According to an aspect of the invention, the invention relates to an electrical device adapted to be placed on an induction hob. The electrical device comprises:
- a first portion comprising a receiving coil adapted to receive electric power from a transmission coil of the induction hob;
- a second portion comprising at least one electrical load, the electric load being electrically coupled with the receiving coil; and
- a shielding portion located at least partially between the first portion and the second portion, the shielding portion being adapted to protect the second portion against electromagnetic radiation transmitted by the transmission coil.

The first portion may be a lower portion of the electrical device and may be adapted to form the base of the electrical device. The second portion may be an upper portion being arranged at a distance to the induction hob. The shielding portion may absorb or reflect the electromagnetic radiation transmitted by the transmission coil in order to avoid a propagation of the electromagnetic field towards the upper portion. Thereby, an electric device is built which is powered by the induction hob, wherein the second, upper portion of the electrical device is shielded against the electromagnetic field transmitted by the induction hob. Thus, a heating of the second portion and/or a damage of components comprised within the second portion is avoided.

According to preferred embodiments, the shielding portion comprises at least two shielding layers stacked in the radiation direction of the transmission coil. Preferably, by stacking multiple shielding layers an optimized attenuation of the electromagnetic field transmitted by the induction hob is provided. According to preferred embodiments, the shielding portion comprises a first shielding layer made of silicate or phyllosilicate minerals, preferably made of MICA. Said first shielding layer may form an electrically high-insulating layer.

According to preferred embodiments, the shielding portion comprises a second shielding layer made of one or more ferrite elements. Ferrites are usually non-conductive ferromagnetic ceramic compounds which may be preferably derived from iron oxides as well as oxides of other metals. Said ferrite elements are used to absorb the electromagnetic field thereby shielding the second portion against the electromagnetic field.

The second shielding layer may comprise a plurality of rectangular ferrite elements arranged in a radial or star-shaped configuration or may comprise a single ferrite element comprising a circular or cylindrical shape.

According to preferred embodiments, the shielding portion may comprise a third shielding layer made of a highly electrical conductive material, in particular aluminium or copper. Said third shielding layer may constitute a shortcut for the electromagnetic field and may therefore form a reflective barrier for said electromagnetic field. Thereby, the second portion of the electrical device is shielded against the electromagnetic field transmitted by the induction hob.

According to preferred embodiments, the third shielding layer comprises a cup-like shape. Thereby it is possible to provide also a lateral shield against electromagnetic radiation caused by the transmission coil of the induction hob.

Preferably, the third shielding layer at least partially encloses the receiving coil and/or the first and second shielding layers. In other words, the third shielding layer provides a cavity with an opening facing downwards, wherein the receiving coil and/or the first and second shielding layers are arranged within said cavity. Thereby it is possible to protect the upper portion of the electrical device and the surrounding area of said device against radiation of the induction hob. In addition it is possible to enhance the energy transfer to the receiving coil because the third shielding layer acts as a collimator, i.e. the electromagnetic field is focused on the receiving coil.

According to preferred embodiments, the electric load is an electric resistor adapted to heat a product. For example, the electrical device may be a kettle, a toaster, an egg boiler etc. So, the product may be, for example, water, bread or eggs etc.. The electric resistor may be directly or indirectly coupled with the receiving coil. The high-frequency current induced within the receiving coil may cause a heating of the electric resistor and thus may cause a heating of the product.

According to preferred embodiments, the electrical device may comprise transforming means for transforming the electric power received at the receiving coil into AC or DC supply voltage. Thereby it is possible to convert the high-frequency voltage/current in a AC voltage/current with lower frequency, e.g. 50Hz mains voltage or a DC voltage/current in order to power different device types. For example, the electrical device may form conversion means with a standardized interface, e.g. an electrical socket for receiving standardized connectors.

According to preferred embodiments, the electrical device comprises a housing made of an electrically non-conductive material. Thereby, the electrical device can be directly placed on top of the induction hob without heating the housing.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows an example sectional schematic view of an electrical device according to a first embodiment;
- Fig. 2: shows an example shielding portion used in the electrical device according the first embodiment;
- Fig. 3: shows an example arrangement of multiple ferrite elements above a receiving coil;
- Fig. 4: shows a further example arrangement of a single ferrite element above a receiving coil;
- Fig. 5: shows an example sectional schematic view of an electrical device according to a second embodiment; and
- Fig. 6: shows an arrangement of an electrical device on an induction hob.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

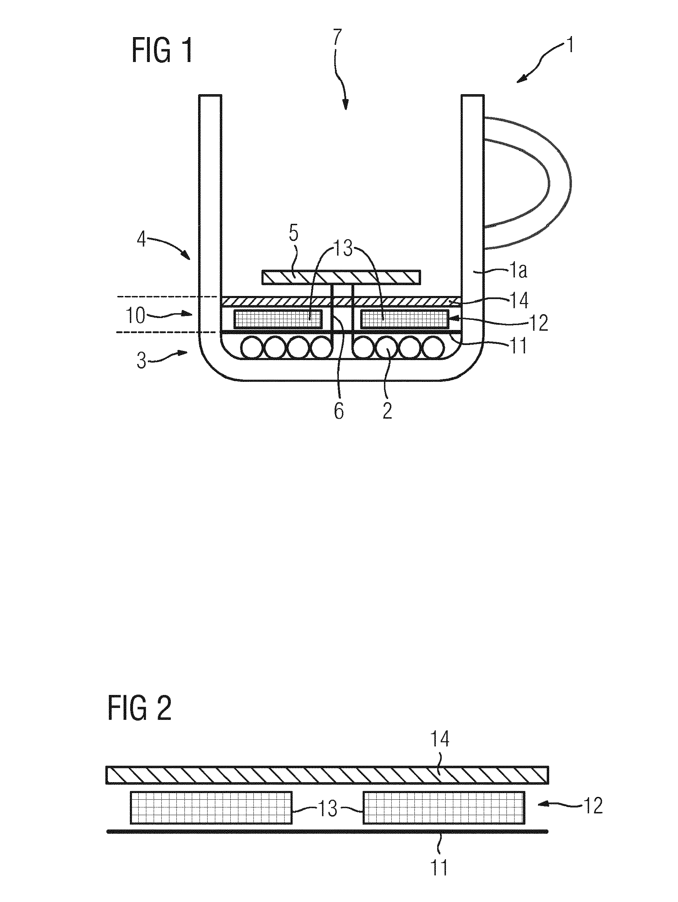

Fig. 1 shows a schematic sectional view of an electrical device 1. For example, the electrical device 1 may be a kettle, a toaster, an egg boiler etc.. It is worth mentioning, that the invention is not restricted to said example embodiments. The electrical device 1 is adapted to be placed on an induction hob in order to receive an electromagnetic field radiated by a transmission coil of the induction hob. The electrical device 1 comprises a receiving coil 2 in order to receive electromagnetic field emitted by the transmission coil. The electric current induced within said receiving coil 2 is used to power the electrical device 1.

More in detail, the electrical device 1 may comprise a housing 1a at least partially surrounding the device. Furthermore, the electrical device 1 comprises a first portion 3 and a second portion 4. The first portion 3 may be the lower portion of the electrical device 1 and may comprise the receiving coil 2. When placed on the induction hob, the first portion 3 of the electrical device 1 may lie against the hob glass of the induction hob.

In addition, the electrical device 1 may comprise a second portion 4, which may be the upper portion of the electrical device 1. The second portion 4 may comprise an electric load 5. Said electric load 5 is electrically coupled with the receiving coil 2 by means of electric wires 6. Said electric load 5 may be an electric resistor, e.g. a heating coil or a heating resistor. The current induced within the receiving coil 2 may flow through said electric load 5. Within the electric load 5, the electric energy is converted into thermal energy. The electric device 1 may comprise a receiving portion 7 adapted to receive a product, e.g. water, bread, eggs etc.. The electric load 5 may be arranged such that the product is heated by the electric load 5. For example, a kettle may comprise a water receiving portion 7.

The electric load 5 may be placed within said water receiving portion in order to heat-up the water.

The electric device 1 further comprises a shielding portion 10. Said shielding portion 10 may be arranged in the first portion 3 and may be located between the receiving coil 2 and the second portion 4. The shielding portion 10 is adapted to shield or protect the second portion 4, i.e. the upper portion of the electrical device 1 against the electromagnetic field radiated by the transmission coil of the induction hob.

According to an embodiment, the shielding portion 10 comprises multiple layers arranged one after the other in a vertical direction, i.e. in the direction of radiation. The multi-layer arrangement is chosen such that the second portion 4 of the electric device, for example the upper portion is not affected by the electromagnetic field.

In closer detail, as shown in Fig. 2, the shielding portion 10 comprises a first shielding layer 11. Said first shielding layer 11 may be arranged close to or in direct vicinity to the receiving coil 2. The first shielding layer 11 may be an electrical isolating sheet material. Preferably, the first shielding layer 11 may be made of silicate or phyllosilicate minerals, e.g. mica.

For large electromagnetic field scenarios, the shielding portion 10 may comprise a second shielding layer 12 arranged above, preferably directly above the first shielding layer 11. Preferably, the second shielding layer 12 is constituted by one or more ferrites. Ferrite material shows excellent absorption properties for high frequency electromagnetic fields. Therefore, the second shielding layer 12 forms a blocking layer for the electromagnetic field radiated by the transmission coil. The second shielding layer 12 may comprise a plurality of rectangular-shaped ferrite elements 13.

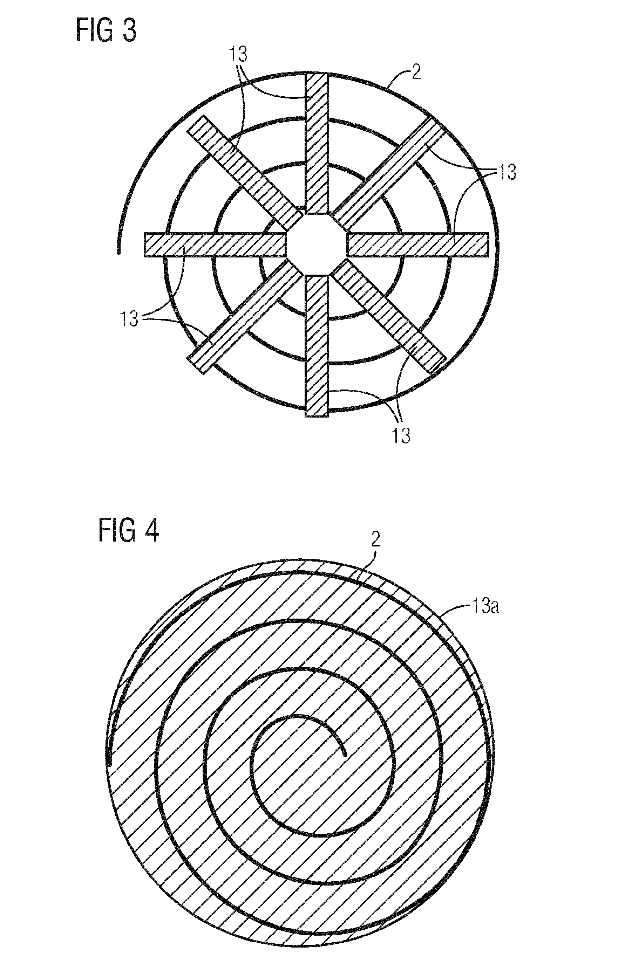

Fig. 3 shows an arrangement of a plurality of ferrite elements 13. Said ferrite elements 13 may be arranged in a star-shaped manner. Preferably, the arrangement of ferrite elements 13 may be located with respect to the transmission direction TR of transmission coil, i.e. the vertical direction, above the receiving coil 2. The longitudinal axes of rectangular-shaped or cube-shaped ferrite elements 13 may extend radially with respect to the centre of the receiving coil 2.

Fig. 4 shows a further embodiment of the second shielding layer 12. The second shielding layer 12 is constituted by a single ferrite element 13a. The shape of the ferrite element 13a is adapted to the shape of the transmission coil. Preferably, said ferrite element may comprise a circular or cylindrical shape. By using a ferrite second shielding layer 12, the electromagnetic field is absorbed, i.e. the second shielding layer 12 forms a electromagnetic shield.

Referring back to Fig. 2, the shielding portion 10 also comprises a third shielding layer 14. Said third shielding layer 14 may located above the second shielding layer 12 and may be constituted by a high electrically conductive material. Preferably, the third shielding layer 14 may be constituted by a metallic sheet material, e.g. aluminium, copper etc. By using a high electrically conductive material, the electromagnetic field is short-circuited, i.e. the electromagnetic field above the shielding portion 10 is zero or close to zero.

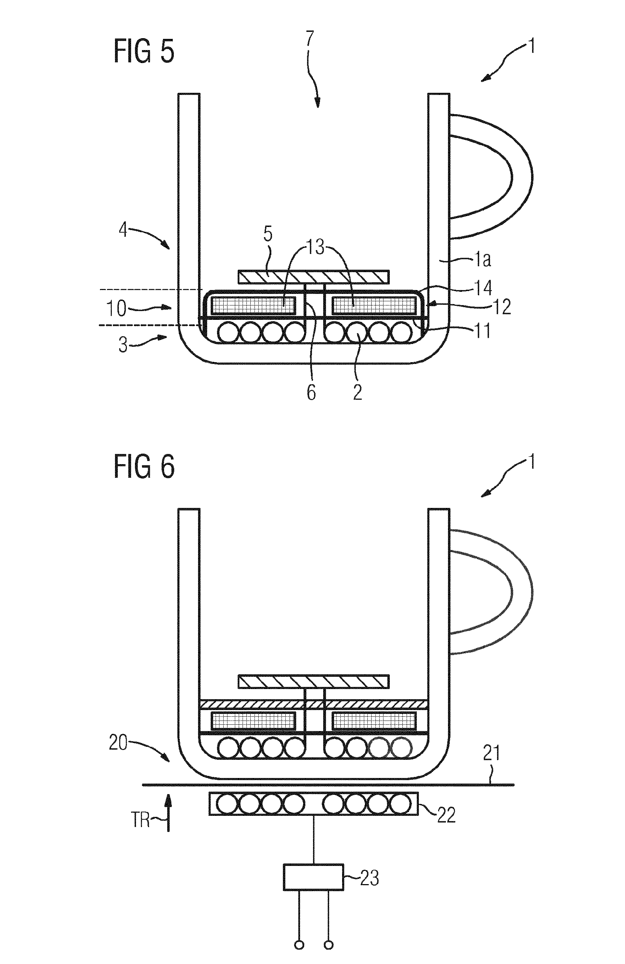

According to fig. 2, the third shielding layer 14 comprises a plane structure. Fig. 5 shows an alternative embodiment of the electrical device. The main difference between the first embodiment according to fig. 1 and the embodiment according to fig. 5 is that the third shielding layer 14 comprises a cup-like shape. More in detail, the third shielding layer 14 comprises a base portion 14.1 and one or more side portions 14.2 projecting from the base portion 14.1 and laterally surrounding the first and second shielding layer and the receiving coil 2. Thereby, the shielding portion 10 does not only have a vertical but also a lateral shielding effect.

Fig. 6 shows an arrangement of an electrical device 1 on top of an induction hob 20. The induction hob 20 comprises a hob glass 21 and a transmission coil 22 located under the hob glass 21. The transmission coil 22 is coupled with an induction generator 23 for generating an electrical current that, when flowing through the transmission coil, causes the radiation of an electromagnetic field. Said electromagnetic field may be transmitted in a vertical transmission direction TR. The electrical device 1 1, specifically the receiving coil 2 of the electrical device 1 may receive said electromagnetic field and power the electrical device 1 using the electric current induced within the receiving coil 2.

Typically, induction hobs radiate a high-frequency electromagnetic field, e.g. in the 30kHz range. The embodiments described above directly use the high frequency current induced within the receiving coil for generating heat by means of an electric resistor. According to a further example, the electrical device may comprise conversion means for transforming the received high-frequency electrical current into a direct current (DC) or an alternating current (AC) with a frequency different to the frequency of the electromagnetic field radiated by the transmission coil, for example 50Hz mains. Such electrical device may be a charging device for charging batteries of an electrical device or any other device driven by AC or DC current. Thereby, the high-frequency electromagnetic field of the induction hob can be used for powering any electrical device.

Above, embodiments of an electrical device according to the present invention as defined in the appended claims have been described. These should be seen as merely non-limiting examples. As understood by a skilled person, many modifications and alternative embodiments are possible within the scope of the invention.

### List of reference numerals

- 1: electrical device
- 2: receiving coil
- 3: first portion
- 4: second portion
- 5: electric load
- 6: electric wires
- 7: receiving portion

- 10: shielding portion
- 11: first shielding layer
- 12: second shielding layer
- 13,13a: ferrite element
- 14: third shielding layer

- 20: induction hob
- 21: hob glass
- 22: transmission coil
- 23: induction generator

- TR: transmission direction

## Claims

1. Electrical device adapted to be placed on an induction hob (20) comprising:
- a first portion (3) comprising a receiving coil (2) adapted to receive electric power from a transmission coil (22) of the induction hob (20);
- a second portion (4) comprising at least one electrical load (5), the electric load (5) being electrically coupled with the receiving coil (2);
- a shielding portion (10) located at least partially between the first portion (3) and the second portion (4), the shielding portion (10) being adapted to protect the second portion (4) against electromagnetic radiation transmitted by the transmission coil (22) and in particular by the field present around the receiving coil (2).

2. Electrical device according to claim 1, wherein the shielding portion (10) comprises at least two shielding layers (11, 12, 14) stacked in the radiation direction of the transmission coil.

3. Electrical device according to claim 1 or 2, wherein the shielding portion (10) comprises a first shielding layer (11) made of silicate or phyllosilicate minerals.

4. Electrical device according to claim 3, wherein the first shielding layer (11) is made of MICA.

5. Electrical device according to anyone of the preceding claims, wherein the shielding portion (10) comprises a second shielding layer (12) made of one or more ferrite elements (13, 13a).

6. Electrical device according to claim 5, wherein the second shielding layer (12) comprises a plurality of rectangular ferrite elements (13) arranged in a radial or star-shaped configuration.

7. Electrical device according to claim 5, wherein the second shielding layer (12) comprises a single ferrite element (13a) comprising a circular or cylindrical shape.

8. Electrical device according to anyone of the preceding claims, wherein the shielding portion (10) comprises a third shielding layer (14) made of a highly electrical conductive material, in particular aluminium or copper.

9. Electrical device according to claim 8, wherein the third shielding layer (14) comprises a cup-like shape.

10. Electrical device according to claim 9, wherein the third shielding layer (14) at least partially encloses the receiving coil (2) and/or the first and second shielding layers (11, 12).

11. Electrical device according to anyone of the preceding claims, wherein the electric load (5) is an electric resistor adapted to heat a product.

12. Electrical device according to anyone of the preceding claims, comprising transforming means for transforming the electric power received at the receiving coil (2) into AC or DC supply voltage.

13. Electrical device according to anyone of the preceding claims, comprising a housing made of an electrically non-conductive material.
